# EUROPÄISCHE PATENTANMELDUNG

(11) **EP 2 455 683 A2**
(43) Veröffentlichungstag der Anmeldung: **23.05.2012**
(21) Anmeldenummer: 11009126.1
(22) Anmeldetag: 17.11.2011
(51) Int. Cl.: F24J 2/52

(54) **Befestigung plattenförmiger Elemente**

(30) Priorität: 17.11.2010 DE 102010051468
(71) Anmelder: Würth Solar GmbH & Co. KG, 74523 Schwäbisch Hall (DE)
(72) Erfinder: Belschner, Werner, 74544 Michelbach a.d.Bilz (DE); Hanselmann, Timo, 74575 Schrozberg (DE); Barie, Matthias, 74635 Kupferzell (DE)
(74) Vertreter: Schatt, Markus F.

(57) **Zusammenfassung**

Die Erfindung betrifft ein Montagesystem für plattenförmige Elemente (1), insbesondere Fassadenelemente, Thermogeneratorelemente, thermische Sonnenkollektoren, Photovoltaik-Module oder Solar-Module, zum Befestigen und Sichern des Elements (1) an wenigstens einer oberen und einer unteren Querschiene (60, 60a, 60b), die parallel und beabstandet zu einander zum Halten eines Elements (1) angeordnet sind, wobei das Montagesystem aufweist: wenigsten ein mit der Rückseite (11) des Elements (1) fest verbundenes Befestigungselement (20) mit wenigstens einem im Wesentlichen senkrecht zur Rückseite (11) angeordnetem Verankerungsmittel zur Befestigung an der oberen Querschiene (60a), wobei das Befestigungselement (20) im Bezug auf eine Falllinie (10) in Einbaulage des Elements (1) zu einer oberen Kante (OK) einer Außenkontur des Elements (1) einen geringeren Abstand als zu einer unteren Kante (UK) der Außenkontur aufweist. Weiter betrifft die Erfindung ein plattenförmiges Element mit einem solchen Montagesystem sowie eine Unterkonstruktion zum Halten eines solchen Elements.

## Beschreibung

### Gebiet der Erfindung

Die Erfindung betrifft ein Montagesystem für plattenförmige Elemente im Allgemeinen und für Fassadenelemente, Thermogeneratorelemente, thermische Sonnenkollektoren, Photovoltaik-Module bzw. Solar-Module im Besonderen, zum Befestigen eines solchen Elements an wenigstens einer oberen und einer unteren Querschiene, die parallel und beabstandet zu einander zum Halten eines solchen plattenförmigen Elements angeordnet sind. Weiter betrifft die Erfindung ein plattenförmiges Element mit einem solchen Montagesystem sowie eine Unterkonstruktion zum Halten eines solchen Elements.

### Hintergrund der Erfindung

Es sind zahlreiche Systeme für plattenförmige Solarmodule oder Photovoltaik(PV)-Module zur unmittelbaren Befestigung oder mittelbaren Befestigung über eine Unterkonstruktion oder Tragstruktur für aufgeständerte PV-Module an Fassaden oder Dächern von Gebäuden bzw. im freien Gelände bekannt.

DE 10 2008 052 594 A1 zeigt ein mehrteiliges Haltesystem zur Befestigung von plattenförmigen Solarmodulen an jeweils vier Randpunkten mittels eines Halters einer Klemmenvorrichtung. Die Klemmvorrichtung umfasst eine obere U-förmige Halterung mit einer maulförmigen Öffnung für ein oberes Modul und eine U-förmige Halterung mit einer maulförmigen Öffnung für ein unteres Modul, wobei diese Halterungen übereinander angeordnet und die Öffnungen voneinander weg orientiert sind. Die Klemmenvorrichtung wird mittels eines Befestigungsabschnitts über eine zentrale Schraube am Gebäude montiert, wobei die obere Halterung und/oder die untere Halterung gegenüber diesem Befestigungsabschnitt verschwenk- und arretierbar sind bzw. ist. Nachteilig ist hier, dass das Haltesystem aus zahlreichen Montageteilen besteht und daher die Montage einen hohen Zeitbedarf erfordert. Weiters können in den Modulen aufgrund der Einspannung an vier Punkten bei Belastung kritische Spannungen auftreten.

DE 10 2009 024 615 A1 zeigt ein Montagesystem für PV-Module mit mindestens zwei profilförmigen Querschienen, die parallel beabstandet angeordnet und zum Halten mehrerer PV-Module vorgesehen sind und jeweils eine plane Stützfläche besitzen. Mit der Rückseite eines PV-Moduls sind Halter mittels eines Klebemittels fest verbunden, wobei das PV-Modul mittels der Halter an den Querschienen einhängbar ist. Hierzu ist jeder Querschiene mindestens ein Halter zugeordnet, wobei jeder Halter eine Vertiefung und jede Querschiene einen integrierten Vorsprung besitzt oder umgekehrt. Das PV-Modul wird zum Einhängen zuerst auf die Querschienen so aufgelegt, dass die Halter auf den Stützflächen der Querschienen plan aufliegen, und dann dort aufliegend in einer Fügerichtung senkrecht zu den Querschienen verschoben, wobei die Vertiefungen und die Vorsprünge ineinander eingreifen. Zwischen mindestens einer Querschiene und einem ihr zugeordneten Halter ist eine Haltesicherung vorgesehen, die eine Verschiebung des Halters gegen die Fügerichtung verhindert. Nachteilig ist hier, dass die Halter zur Realisierung eines Toleranzausgleiches hinsichtlich der Beabstandung der Querschienen als auch zur Sicherung des PV-Moduls gegen Diebstahl oder Windsog sehr komplex ist.

Aus der DE 10 1008 032 985 A1 ist eine Befestigungsstruktur für ein großflächiges Solarmodul bekannt, Die Befestigungsstruktur weist einen Unterbau mit zwei Aufnahmeprofile auf, die mit Halteprofilen zur Befestigung des Solarmoduls zusammenwirken. Dabei bilden die Aufnahme- und die Halteprofile eine Verriegelung.

Aus der DE 20 2010 007 658 U1 ist ein Modulträger, insbesondere für Photovoltaikmodule, zur Aufstellung auf Flachdächern bekannt. Der Modulträger weist vordere und hintere Halteprofile mit Halterungen für die Profile sowie ein Windabdichtungselement auf.

Aus der FR 2 538 867 A1 ist eine Haltevorrichtung zur Befestigung von Gebäudeverleidungsplatten an einer senkrechten Wand bekannt.

Aus der FR 2 928 672 A1 ist eine Fassadenverkleidung, insbesondere für eine Fassade oder ein Dach bekannt.

Schließlich ist aus der WO99 017 063 A1 eine Befestigung für Solarmodule bekannt, bestehend aus wenigstens einem Aufnahmeteil für die Befestigung am Einsatzort und Befestigungsmitteln für die Befestigung eines Solarmoduls an diesem Aufnahmeteil. Die Befestigungsmittel sind Vorsprünge, Stifte, Haken oder dergleichen, die mit dem Solarmodul verbunden oder an diesem angeformt sind.

Es ist daher eine mögliche Aufgabe der vorliegenden Erfindung, ein Montagesystem für plattenförmige Elemente, insbesondere für Fassadenelemente, Thermogeneratorelemente, thermische Sonnenkollektoren, Solarmodule bzw. Photovoltaikmodule, zum Befestigen solcher Elemente an Fassaden oder Dächern von Gebäuden bzw. an einer Tragstruktur, vorzuschlagen, welches einfach in der Konstruktion und mit weniger Montageaufwand verbunden ist.

### Zusammenfassung der Erfindung

Die Aufgabe wird mit den Merkmalen der unabhängigen Ansprüche gelöst. Weitere Ausführungsformen sind in den auf diese rückbezogenen Unteransprüchen angegeben.

Ein erfindungsgemäßes Montagesystem dient zum Befestigen und ggf. Sichern plattenförmiger Elemente, insbesondere Fassadenelemente, Thermogeneratorelemente, thermische Sonnenkollektoren, Photovoltaik-Module oder Solar-Module, an wenigstens einer oberen und einer unteren Querschiene, die parallel und beabstandet zu einander zum Halten des Elements angeordnet sind.

In diesem Zusammenhang sei angemerkt, dass "plattenförmig" bedeutet, dass ein solches Element im Vergleich zu seiner Länge und Breite eine deutlich geringere Dicke bzw. Stärke besitzt, d.h. im Wesentlichen die Gestalt einer Platte hat. Die Außenkontur der plattenförmigen Elemente ist gewöhnlich rechteckig oder auch quadratisch, kann aber grundsätzlich jegliche gewünschte Form aufweisen.

Das Montagesystem weist wenigsten ein mit einer Rückseite des plattenförmigen Elements fest verbundenes Befestigungselement auf, welches wenigstens ein an und bevorzugt im Wesentlichen senkrecht zu der Ebene der Rückseite angeordnetes Verankerungsmittel zur Befestigung an der oberen Querschiene aufweist. Das Befestigungselement ist im Bezug auf eine Falllinie in Einbaulage des Elements zu einer oberen Kante einer Außenkontur des Elements in einem geringeren Abstand als zu einer unteren Kante der Außenkontur angeordnet.

Durch ein Sicherungselement wird die untere Auflagerstelle des Elements entgegen der Auflagerrichtung gesichert. Über die Dimensionierung der Maulweite der maulförmigen Öffnung kann unter Zwischenschaltung eines elastischen Materials - das Element besser gegen eine unbefugte Abnahme und besonders gegen Windauftrieb und damit einhergehendes Flattern des Elements gesichert werden. Weiter werden damit auch die Befestigungspunkte an den oberen Auflagerstellen, d.h. die zweiwertigen Lager, am Element gegen eine Momentenbelastung geschützt.

Das elastische Element kann im Querschnitt z.B. dreieckig, oval, kreisförmig oder viereckig sein ausgebildet sein. Dabei verläuft die Ebene des Querschnitts quer, insbesondere rechtwinklig, zu der Oberflächenebene der plattenförmigen Elemente. Ferner kann die Ebene des Querschnitts derart verlaufen, dass die Falllinie in diese Querschnittsebene fällt. Dies erlaubt es, das elastische Element durch Ablängen von als Endlosware vorliegenden Materialsträngen herzustellen.

Das elastische Element kann aus einem weichem Kautschuk, Silikon oder Ethylen-Propylen-Dien-Kautschuk (EPDM) gefertigt sein. Weicher Kautschuk ist ein besonders preiswertes und leicht zu verarbeitendes Material. Silikon oder Ethylen-Propylen-Dien-Kautschuk (EPDM) eignen sich besonders, da beide Materialien besonders UVbeständig sind. Ferner sind Silikon oder Ethylen-Propylen-Dien-Kautschuk (EPDM) besonders chemikalienresistent, insbesondere gegenüber ammoniakhaltigen Gasen, wie sie in der Umgebung von Nutzgebäuden zur Nutztierhaltung in erhöhten Konzentrationen auftreten können.

Das elastische Element kann an dem PV-Modul oder einer Unterkonstruktion stoffschlüssig befestigt sein. Wenn das elastische Element aus Silikon besteht, kann das Silikon auf das PV-Modul aufgespritzt und so in seine gewünschte Form gebracht werden. Es kann aber auch ein vorgefertigtes elastisches Element, z.B. aus Ethylen-Propylen-Dien-Kautschuk (EPDM) zur Herstellung dieser stoffschlüssigen Verbindung verwendet werden, das auf ein PV-Modul aufgeklebt wird.

Der Kerngedanke der Erfindung liegt in der Realisierung einer besonders einfachen Befestigung des plattenförmigen Elements mit einem zweiwertigen Lager, in Form einer Auflagerung mit einem Verankerungsmittel, welches beispielsweise durch Formschluss oder ggf. auch ein Klebemittel in einer dazu passenden Aufnahme festgelegt wird. Die Befestigung des gesamten Elements an der Unterkonstruktion erfolgt in erster Linie mit dem Verankerungsmittel und lässt sich daher sehr einfach, schnell und trotzdem sicher montieren.

In einer vorteilhaften Weiterbildung des Montagesystems ist weiter wenigstens ein Sicherungselement vorgesehen, das im Bezug auf die Falllinie in Einbaulage des Elements unterhalb des Befestigungselements angeordnet ist. Das Sicherungselement ist so ausgelegt, dass es in Einbaulage des Elements die Bewegungsfreiheit des Elements senkrecht zur Montageebene von der Unterkonstruktion weg einschränkt oder bei entsprechender Dimensionierung ganz verhindert.

Der Kerngedanke der vorteilhaften Weiterbildung liegt in der Realisierung der Befestigung des plattenförmigen Elements durch eine Kombination aus einem einwertigen Lager, in Form einer einfachen Auflagerung, mit dem zweiwertigen Lager, in Form der Auflagerung mit dem Verankerungsmittel. Die Befestigung des gesamten Elements an der Unterkonstruktion erfolgt weiter in erster Linie mit dem Verankerungsmittel und lässt sich daher sehr einfach, schnell und trotzdem sicher montieren. Durch hier vorgeschlagene Weiterbildung des Montagesystems mit einer beweglichen Lagerhälfte werden Spannungen im Element, beispielsweise einer Glasplatte oder Siliziumschicht des Elements, aufgrund von mechanischer und/oder thermischer Belastungen minimiert bzw. verhindert.

Das Sicherungselement kann hierzu einen abgewinkelten Arm aufweisen, der beabstandet und parallel zur Rückseite des Elements sowie im Wesentlichen senkrecht zur Falllinie verläuft. Der Arm bildet mit der Rückseite eine im Wesentlichen in Richtung der Falllinie geöffnete maulförmige Öffnung zum Hintergreifen einer aus Sicht der Montageebene an der oder von der unteren Querschiene gebildeten Hinterschneidung.

Hinsichtlich der Befestigung des wenigstens einen Befestigungselements und ggf. des wenigstens einen Sicherungselements an der Rückseite des plattenförmigen Elements sei Folgendes angemerkt.

Ein Befestigungselement sowie ein Sicherungselement besitzt zur Befestigung an der Rückseite des Elements eine Befestigungsfläche, beispielsweise eine ebene Kontaktfläche einer Fußplatte des Elements. Die Befestigungsfläche kann dann mittels einer Klebeverbindung mit der Rückseite des Elements verklebt werden.

Die Art des für die Klebeverbindung geeigneten Klebstoffes wird im Wesentlichen durch die zu verbindenden Materialen bestimmt. Wenn die Befestigungselemente und ggf. Sicherungselemente aus einem Metall bestehen, dann eignet sich beispielsweise zur Verklebung mit der Glasrückseite eines PV-Moduls als plattenförmiges Element besonders ein Klebstoff auf Silikonbasis. Ein solches PV-Modul könnte an der Rückseite beispielsweise zum verbesserten Schutz des Glasträgers mit einer Kunststoffschicht laminiert sein. In diesem Fall kann, wenn die Befestigungselemente und ggf. Sicherungselemente ebenfalls aus einem Kunststoff bestehen, auch eine stoffschlüssige Befestigung, wie z. B. durch Ultraschallschweißen oder Reibschweißen, zur Befestigung verwendet werden. Alternativ kann auch immer ein doppelseitig mit jeweils einem geeigneten Klebstoff beschichteter Träger nach Art eines doppelseitigen Klebebandes verwendet werden.

Es sei noch angemerkt, dass gerade aufgrund des hohen Wertes von Thermogeneratorelementen, thermische Sonnenkollektoren, PV-Modulen oder Solarmodulen, diese einen besonderen Anreiz für Diebstahl darstellen, insbesondere bei Boden gestützten und auf einem Dach angeordneten Anlagen in abgelegenen Gebieten wie zum Beispiel in Industriegebieten oder bei Feldinstallationen. Um den Anreiz für Diebe zu minimieren, kann die Befestigung zumindest der Befestigungselemente an der Rückseite solcher plattenförmiger Elemente so ausgeführt werden, dass diese nur unter Zerstörung des Elements von selbigen entfernt werden können. Wenn das Verankerungsmittel so ausgelegt ist, dass es bei der Verbindung mit einer Unterkonstruktion eine unlösbare Verbindung eingeht, die stärker ausgelegt ist als die zur Zerstörung des Elements an den Befestigungspunkten notwendige Kraft, wird das Element bei einem Diebstahlversuch zerstört und damit unbrauchbar, mithin wertlos.

Weiter ist in Bezug auf die Falllinie unterhalb des wenigstens einen Befestigungsmittels an der Rückseite des Elements wenigstens ein elastisches Element, wie z. B. eine Silikongummistreifen, derart angeordnet, dass das elastische Element bei einem auf den Querschienen montierten Element, d.h. in Einbaulage, auf der unteren Querschiene aufliegt. Damit wird eine Beschädigung des Elements durch den Kontakt mit der im Vergleich zum Element starren Querschiene vermieden.

Mehrere Befestigungselemente und ggf. mehrere Sicherungselemente können an der Rückseite des Elements auf einer im Wesentlichen senkrecht zur Falllinie verlaufenden Linie angeordnet werden. Bevorzugt werden auch jeweils ein Befestigungselement und ein Sicherungselemente an der Rückseite des Elements auf einer im Wesentlichen zur Falllinie parallel verlaufenden Linie angeordnet. Hier sei jedoch angemerkt, dass ein seitlicher Versatz zwischen einem Befestigungselement und einem darunter angeordneten Sicherungselemente die Funktion des Befestigungssystems nicht beeinträchtig.

Das Befestigungselement und/oder das Sicherungselement können auch als Profilschiene ausgeführt sein, die jeweils im Wesentlichen senkrecht zur Falllinie an der Rückseite des Elements befestigt ist bzw. sind. Das Verankerungselement sowie der abgewinkelte Arm des Sicherungselements können dann auch entsprechend stegförmig ausgeführt sein und mit den jeweiligen Querschienen bestimmungsgemäß zusammenwirken.

Das wenigstens eine Befestigungselement bzw. das wenigstens eine elastische Element können jeweils von der Außenkontur des Elements beabstandet im Flächeninneren der Rückseite angeordnet werden. Die Befestigungsstellen der Befestigungselemente und die Auflagerstellen des Elements an der unteren Querschiene können so gewählt werden, dass die sich für das Element in Einbaulage ergebenden Auflagerpunkte an solchen Stellen befinden, dass das Element in Einbaulage eine minimale Biegebelastung erfährt. Dazu können die Befestigungspunkte an der Rückseite des Elements so gewählt werden, dass sich bei einer elastischen Verformung des Elements durch Flächenbelastung z. B. aufgrund von Wind oder Schnee in den Befestigungspunkte für die Biegebelastung horizontale Tangente ergeben. Dann wird kein Drehmoment auf die Befestigungspunkte ausgeübt.

Das Verankerungsmittel des Befestigungselements kann als ein Ankerkörper beispielsweise in Form eines Stifts mit einem an einem der Rückseite des Elements gegenüberliegenden Ende des Ankerkörpers angeordneten, verdrängbaren und sich selbsttätig rückstellenden Hinterschneidungselement ausgeführt werden.

Das Hinterschneidungselement kann beispielsweise in Form wenigstens eines Schnapp-Rast-Elements oder als Schapphaken ausgeführt sein. Alternativ kann auch das Material des Verankerungselements so elastisch sein, dass es nach Überwindung einer Engstelle in einer Aufnahme an der Querschiene sich wieder ausdehnen kann und so die Hinterschneidung hintergreifen kann.

Die Erfindung betrifft auch plattenförmige Elemente, insbesondere plattenförmige Fassadenelemente, Thermogeneratorelemente, thermische Sonnenkollektoren, Photovoltaik-Module oder Solar-Module, die eine Rückseite aufweisen, an der ein Montagesystem gemäß der Erfindung befestigt ist.

Die Erfindung betrifft weiter eine Unterkonstruktion zur Bildung einer Montageebene und zum Halten wenigstens eines plattenförmigen Elements, an dessen Rückseite ein Montagesystem gemäß der Erfindung befestigt ist, in der Montageebene.

Eine erfindungsgemäße Unterkonstruktion weist dazu wenigstens eine erste und eine zweite Querschiene auf, die parallel und beabstandet zu einander zum Halten wenigstens eines Elements angeordnet sind. Jede der Querschienen besitzt wenigstens an oberen und unteren Auflagestellen des wenigstens eine Elements plane Stützflächen. Wenigstens die erste Querschiene, die in Bezug auf eine Falllinie der Montageebene oberhalb der zweiten Querschiene angeordnet ist, weist wenigstens an den oberen Auflagestellen Ausnehmungen mit Hinterscheidungen zur Aufnahme des Verankerungsmittels und zum Zusammenwirken mit dem Hinterschneidungselement des Verankerungsmittels, insbesondere in Form wenigstens eines Schapphakens, auf.

Für die vorteilhafte Weiterbildung des Montagesystems weist wenigstens die zweite Querschiene zumindest im Bereich unterer Auflagestellen aus Sicht der Montageebene eine Hinterschneidung für ein am Element befestigtes Sicherungselement auf.

Wenn das Element an seiner Rückseite kein elastisches Element an den unteren Auflagestellen aufweist, kann alternativ oder auch zusätzlich auf der Stützfläche der zweiten Querschiene als Auflagerfläche für die Rückseite des Elements ein elastisches Element, bevorzugt aus einem Silikongummi, angeordnet sein. Ein solches elastisches Pufferelement kann ebenfalls mittels einer Klebeverbindung befestigt werden. Alternativ kann ein solches Element, insbesondere dann, wenn die erste und zweite Querschiene im Wesentlichen identisch sind, auch an den Ausnehmungen, die im Fall der Verwendung als erste Querschiene zur Verbindung mit einem Befestigungselement vorgesehen sind, formschlüssig verankert werden.

Wenigstens die erste Querschiene kann als eine Profilschiene, insbesondere mit einem C-Profil, mit einer Nut in der Stützebene ausgeführt sein. Die Nut bildet dann die Ausnehmung für das Befestigungselement und weist wenigstens die Hinterschneidung für das verdrängbare Hinterschneidungselement auf.

Wenigstens die zweite Querschiene kann zur Ausbildung der Hinterschneidung für ein Sicherungselement aus Sicht der Montageebene eine entlang der Querschiene und parallel zur Montageebene verlaufende Kragplatte aufweisen. Das Profil der Querschiene kann zur Vermeidung von einer Fehlmontage auch symmetrisch ausgeführt sein, d.h. auf beiden Seiten aus Sicht der Montageebene die Kragplatte aufweisen. Alternativ kann die Hinterschneidung auch aus Sicht der Montageebene durch die Rückseite der zweiten Querschiene gebildet werden. Es versteht sich, dass das Sicherungselement lediglich in der Maulweite an die Art bzw. Form der Hinterschneidung angepasst sein muss.

Im einfachsten Fall sind die erste und zweite Querschiene als Profilschienen, insbesondere als Strangpressprofilschienen ausgeführt, und bestehen bevorzugt aus einem Metall oder einer Metalllegierung, insbesondere Aluminium oder einer Aluminiumlegierung.

Die Erfindung eignet sich besonders zur Befestigung von plattenförmigen Fassadenelemente, Thermogeneratorelemente, thermische Sonnenkollektoren, Photovoltaikmodulen und insbesondere bei rahmenlosen Photovoltaikmodulen, da die erfindungsgemäße Befestigung vorteilhaft Spannungen im plattenförmigen Element, insbesondere in starren Bestandteilen wie Glasplatten oder Siliziumschichten des Elements, aufgrund von Windlast oder Schneelast sowie thermischer Belastungen vermeidet.

### Kurzbeschreibung der Zeichnungsfiguren

Weitere vorteilhafte Ausgestaltungen der Erfindung, sowie Ausführungsbeispiele hierzu, werden nachstehend in Verbindung mit den beigefügten Zeichnungsfiguren näher erläutert. Funktionsähnliche Bauteile oder Komponenten sind teilweise mit gleichen Bezugszeichen versehen. Die innerhalb der Beschreibung des Ausführungsbeispiels verwendeten Begriffe "links", "rechts", "oben", "unten" beziehen sich auf die Zeichnungsfiguren in einer Ausrichtung mit normal lesbaren Figurenbezeichnung und Bezugszeichen.
Fig. 1 zeigt eine Seitenansicht von auf einer Tragstruktur befestigten plattenförmigen PV-Modulen mit einem Befestigungssystem gemäß einem Ausführungsbeispiel der Erfindung,
Fig. 2 zeigt eine Draufsicht auf die PV-Module der Fig. 1,
Fig. 3 ist eine perspektivische Darstellung eines PV-Moduls mit einer Darstellung der Lagerkräfte in den Befestigungspunkten in einer Projektionsebene,
Fig. 4a zeigt eine Seitenansicht eines PV-Moduls mit Befestigungsmitteln gemäß einem ersten Ausführungsbeispiel der Erfindung in Zusammenspiel mit Querschienen einer Unterkonstruktion,
Fig. 4b zeigt eine Seitenansicht eines PV-Moduls mit Befestigungsmitteln gemäß einem zweiten Ausführungsbeispiel der Erfindung in Zusammenspiel mit Querschienen einer Unterkonstruktion, und
Fig. 5a bis 5b veranschaulichen die wesentlichen Schritte des Montagevorgangs eines PV-Moduls mit Befestigungsmitteln gemäß der Fig. 4a an zwei Querschienen.

### Detaillierte Beschreibung der Ausführungsbeispiele

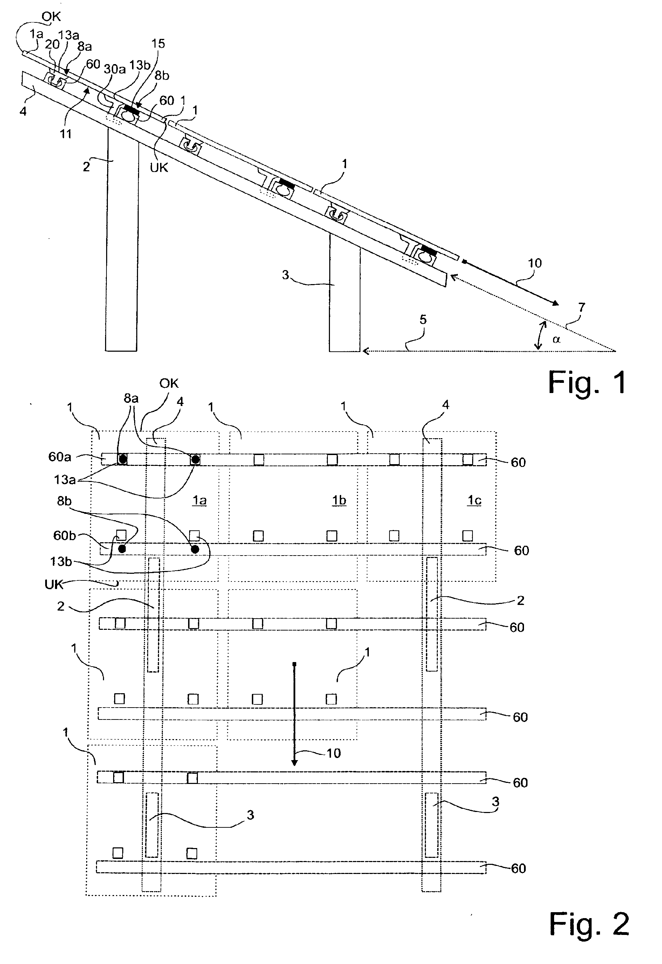

Fig. 1 und Fig.2 zeigen schematisch das erfindungsgemäße Befestigungs- und Sicherungssystem bzw. Montagesystem anhand eines PV-Modulfelds mit mehreren auf einer Unterkonstruktion oder Tragkonstruktion angeordneten plattenförmigen PV-Modulen als Beispiel für plattenförmige Elemente im Sinne der Erfindung. Das PV-Modulfeld im Anwendungsbeispiel besteht aus neun baugleichen plattenförmigen Solarmodulen oder PV-Modulen 1. Bei den PV-Modulen kann es sich beispielsweise um rahmenlose plattenförmige Dünnschichtmodule mit einem rechteckigen Format handeln. Das erfindungsgemäße Befestigungssystem ist grundsätzlich auch für andere Arten von plattenförmigen Elementen geeignet, wie die bereits genannten Fassadenelemente, Thermogeneratorelemente, thermische Sonnenkollektoren und dergleichen.

Es sei angemerkt, dass zur vereinfachten Darstellung in der Fig. 2 nur sechs der insgesamt neun montierbaren PV-Module 1 als bereits montiert dargestellt sind. D.h., es können noch drei weitere PV-Module 1 an der Unterkonstruktion befestigt werden. Weiters wurde bei sich wiederholenden Elementen, die mit gleichen Bezugszeichen gekennzeichnet werden könnten, der Übersichtlichkeit wegen auf Bezugszeichen verzichtet. In Fig. 1 und Fig. 2 ist daher lediglich das PV-Modul 1a im Detail mit Bezugszeichen versehen.

Die PV-Module 1 sind auf der Unterkonstruktion in einem üblicherweise in einem hinsichtlich des Einstrahlwinkels der Sonne am Aufstellort optimierten Winkel α schräg angeordnet. Die Unterkonstruktion umfasst hierzu zwei lange Stützen 2 und zwei kurze Stützen 3 sowie zwei Schrägbalken 4, wobei jeweils einer der Schrägbalken 4 mittels einer der langen Stützen 2 und einer der kurzen Stützen 3 schräg im Winkel α gegenüber einer horizontalen bzw. waagrechten Ebene 5 angeordnet sind. Die zwei Schrägbalken 4 bilden mit daran angeordneten Querschienen 60 eine Montageebene 7, die ebenfalls im Winkel α von beispielsweise etwa 30° gegenüber der horizontalen Ebene 5 geneigt ist.

In Fig. 1 liegt die Montageebene 7 zu einer von den plattenförmigen PV-Modulen 1 definierten Modulebene parallel. Ein PV-Modul 1 ist somit in der Montageebene bzw. Modulebene an der Unterkonstruktion gegenüber der horizontalen Ebene 5 ebenfalls im Winkel α angeordnet. Durch eine entsprechende Dimensionierung der noch näher zu erörternden Befestigungselemente und/oder bestimmter Querschienen 60 können die PV-Module 1 selbst in einem bestimmten Winkel zur Montageebene 7 an der Unterkonstruktion angeordnet sein bzw. werden.

Der Pfeil 10 in den Fig. 1 bis 3 veranschaulicht die Hangabtriebsrichtung bzw. Falllinie der PV-Module 1. Die Falllinie bei den plattenförmigen Modulen ist hier eine Linie auf der Oberfläche, die der Richtung des größten Gefälles folgt, d.h. die Falllinie würde am Modul angetragene Höhenlinien stets rechtwinklig schneiden.

In dem in den Fig. 1 und 2 dargestellten Anwendungsbeispiel sind die Querschienen 60 der Unterkonstruktion baugleiche Profilschienen und im Wesentlichen parallel zueinander sowie zu den zwei Schrägbalken 4 quer verlaufend an den letzteren angeordnet. Jeweils zwei benachbarte Querschienen 60 tragen jeweils drei in einer Reihe angeordnete PV-Module 1, beispielsweise sind auf den beiden obersten Querschienen 60 die PV-Module 1 a, 1 b, 1 c an einer ersten - oberen - Querschienen 60a und einer zweiten - unteren - Querschiene 60b gelagert.

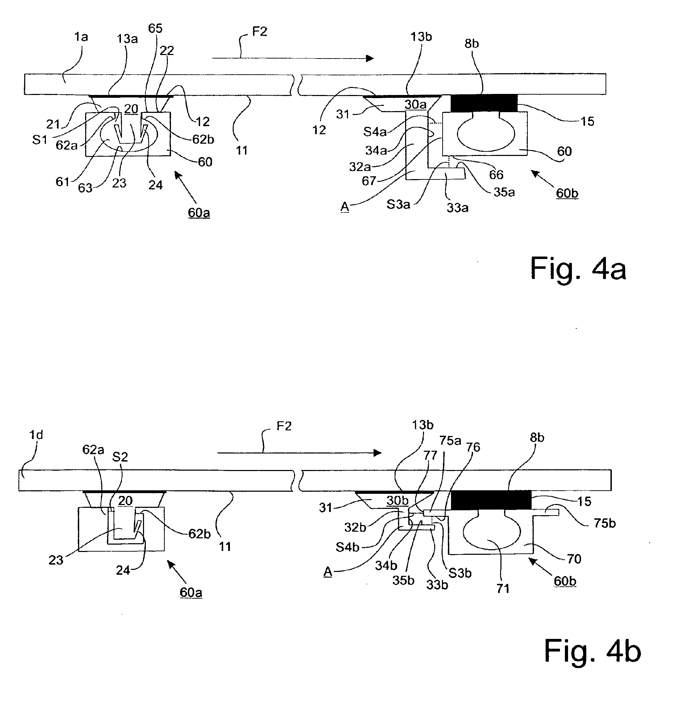

Die Querschienen 60 besitzen bei dem dargestellten Ausführungsbeispiel einen Querschnitt in Form eines sogenannten C-Profils, wobei der Querschnitt über die gesamte Länge einheitlich ist. Das Profil der Querschienen 60 ist in Fig. 4a deutlicher dargestellt.

Das Befestigungssystem gemäß der vorliegenden Erfindung umfasst die Querschienen 60 insoweit, als das Profil der Querschienen 60 zumindest im Bereich der Auflagerpunkten der PV-Module 1 so ausgestaltet ist, dass ein PV-Modul 1 mit erfindungsgemäß ausgestalteten Befestigungselementen mit der Querschiene 60 im jeweiligen Auflagerpunkt bestimmungsgemäß zusammenwirken, d.h. daran verankert werden, kann. Deshalb versteht es sich, dass die zur Veranschaulichung in den Figuren dargestellten Profile der Querschienen 60 lediglich ein Beispiel darstellen und keinesfalls die Erfindung auf die konkrete Ausführung als C-Profil beschränkt ist.

Es sei weiter angemerkt, dass es auch möglich ist, die Querschienen 60 der Unterkonstruktion an einer Gebäudehülle anzuordnen, insbesondere an einer Fassade oder einem Dach des Gebäudes. Wenn die PV-Module auf einem Schrägdach installiert werden, kann es bei geeigneter Dachneigung auch ausreichen, benötigte Querschienen ggf. mittels Abstandhaltern direkt auf das Dach zu montieren. Wesentlich für die noch zu erläuternde Funktion des Montagesystems ist, dass die Querschienen 60 wie dargestellt zur Falllinie 10 der PV-Module 1 im Wesentlichen quer verlaufen.

Fig. 1 und 2 zeigen weiter, dass jedes plattenförmige PV-Modul 1 an mindestens vier Punkten bzw. Stellen an je zwei der Querschienen 60 gelagert ist, wobei sich an jeder der zwei Querschienen 60 je zwei der Auflagerpunkte als obere Auflagerpunkte 8a bzw. als untere Auflagerpunkte 8b befinden. In Fig. 2 sind die Auflagerpunkte 8a, 8b zur vereinfachten Darstellung nur im Zusammenhang mit dem PV-Modul 1a dargestellt. Alle Auflagerpunkte 8a, 8b nehmen die vom PV-Modul ausgehenden Normalkräfte auf, die durch die Gewichtskraft und ggf. zusätzliche Belastungen wie durch Wind oder Schnee verursacht sein können. Die oberen Auflagerpunkte 8a nehmen zusätzlich die in Richtung der Falllinie 10 gerichtete Komponente dieser Kräfte auf.

Wie anhand Fig. 4a und 4b noch im Detail näher erläutert wird, befinden sich an der Rückseite 11 jedes PV-Moduls 1 im Bereich der oberen Auflagerpunkte 8a bzw. im Bereich der unteren Auflagerpunkte 8b fest - beispielsweise mittels einer Klebeschicht 12 aus geeignetem Klebstoff oder einem Abschnitts eines doppelseitigen Klebebands - mit dem PV-Modul 1 verbundene Befestigungselemente 20 und Sicherungselemente 30a bzw. 30b.

Die Befestigungselemente 20 bzw. Sicherungselemente 30a, 30b können in einem industriellen Fertigungsverfahren bereits werkseitig auf die Rückseite der PV-Module 1 befestigt werden. Alternativ ist es möglich, diese Elemente am Installationsort der PV-Module 1 - zum Beispiel unter Verwendung einer Montageschablone wiederholbar an mit der Schablone bestimmbaren und damit vorbestimmten Stellen an das jeweilige PV-Modul 1 zu befestigen.

Jedenfalls sind die Befestigungselemente 20 bzw. Sicherungselemente 30a, 30b an der Befestigungsfläche 13 mittels der Klebeschicht 12 mit der ebenen Rückseite 11 1 des PV-Moduls 1 fest verbunden. Die Klebeschicht 12 ist beispielsweise in den Fig. 4a und 4b schematisch zwischen der Rückseite 11 des PV-Moduls 1 und dem Befestigungselement 20 bzw. dem Sicherungselement 30 erkennbar.

Die Befestigungselemente 20 bzw. Sicherungselemente 30a, 30b können aus einem Metallwerkstoff, beispielsweise aus Aluminium oder einer Aluminiumlegierung, oder alternativ aus einem Kunststoff bestehen. Die Rückseite 11 eines PV-Moduls 1 in Form eines rahmenlosen Dünnschichtmoduls besteht gewöhnlich aus Glas. Daher ist zur Verklebung diese Materialkombination beispielsweise ein im Außenbereich erprobter Zwei-Komponenten-Silikonklebstoff geeignet. Ein solcher Klebstoff wirkt auch zusätzlich dämpfend und ausgleichend im Hinblick auf die Vermeidung von Spannungen im PV-Modul 1.

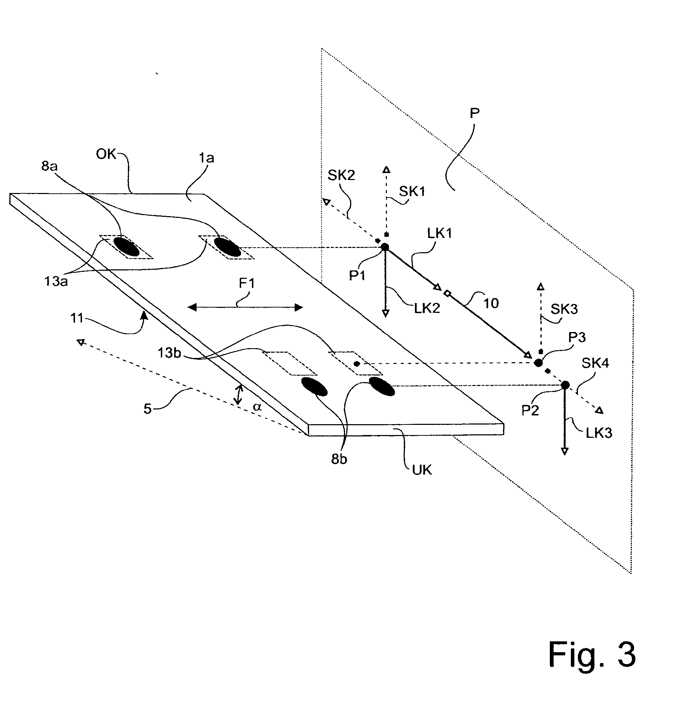

Fig. 3 zeigt eine perspektivische Darstellung des PV-Moduls 1a mit vier schematisch an der Rückseite 11 angedeuteten Befestigungsflächen 13a der Befestigungselemente 20 bzw. Befestigungsflächen 13b der Sicherungselemente 30a bzw. 30b. Des Weiteren sind die oberen Auflagerpunkte 8a und die unteren Auflagerpunkte 8b angedeutet. Zur Veranschaulichung der Lagerkräfte bzw. im Sicherungsfall auftretenden Sicherungslagerkräfte sind entsprechende Kraftpfeile in der rechts neben dem PV-Modul 1 angedeuteten Projektionsebene P dargestellt.

Die Darstellung in der Projektionsebene P zeigt, dass es für den dreidimensionalen Belastungsfall des plattenförmigen PV-Moduls 1 im Hinblick auf die Funktion der erfindungsgemäßen Befestigung im Wesentlichen auf das Zusammenspiel je eines mittels eines Befestigungselements 20 ausgeführten oberen Auflagerpunktes 8a mit einem unteren Auflagerpunkt 8b ankommt. In der Projektionsebene P ist die Funktion der erfindungsgemäßen Befestigung und Lagerung des PV-Moduls 1 auf einen zweidimensionale Darstellung reduziert und entspricht damit im Wesentlichen den Seitenansichten der Fig. 4a und 4b.

In der Projektionsebene P sind in den Auflagerpunkten L1 und L2 die auftretenden Lagerkräfte LK1, LK2, LK3 dargestellt. Die Lagerkräfte LK2, LK3 entsprechen den senkrecht in die Auflagerpunkte eingeleiteten Normalkräften des PV-Moduls 1a. Die Lagerkraft LK2 entspricht dem Anteil der Gewichtskraft und von auf das PV-Modul wirkenden Kräften, der in Richtung der Falllinie 10 wirkt. Diese Lagerkraft LK1 wird im oberen Befestigungspunkt vom noch näher im Zusammenhang mit der Fig. 4a zu erläuternden Verankerungsmittel des Befestigungsmittels 20 aufgenommen.

In der Projektionsebene P sind weiter Sicherungskräfte SK1 bis SK4 angetragen, die mit einem Abstand zum jeweiligen Projektionspunkt in der Projektionsebene dargestellt sind. Der Abstand veranschaulicht ein vorbestimmtes Lagerspiel am Befestigungselement 20 bzw. am Sicherungselement 30a, d.h. das PV-Modul 1a kann um eine gewisse Wegstrecke in die Richtung des jeweiligen Pfeils der Sicherungskräfte bewegt werden, bevor Kräfte jeweils vom Befestigungselement 20 bzw. Sicherungselement 30a aufgenommen werden müssen bzw. können.

Wie bereits angemerkt, kann das Lagerspiel beispielsweise hinsichtlich der Kraft SK3 durch entsprechende Dimensionierung der Maulweite des Sicherungselements 30a beeinflusst werden. Lediglich hinsichtlich der Kräfte SK2 und SK4 sollte ein ausreichendes Gesamtspiel sichergestellt werden, um dem PV-Modul genügend "Bewegungsfreiheit" zu lassen, damit Temperaturschwankungen keine thermischen Spannungen im PV-Modul hervorrufen können.

Durch diese in der Fig. 3 dargestellten Bewegungsfreiheiten in Richtung der Sicherungskräfte SK1 bis SK4 wird im Ergebnis vermieden, dass die Auflagerung des PV-Moduls 1a auf den Querschienen 60 überbestimmt bzw. eingeklemmt ist. Folglich werden Spannungen im PV-Modul aufgrund der Befestigung vermieden.

In Fig. 3 ist gut zu erkennen, dass das PV-Modul in Richtung des Pfeils F1 lediglich durch die Haftreibung in den Auflagerpunkten gehalten wird. Damit können im PV-Modul 1a in die Richtung des Pfeils F1 auftretende Kräfte zu keine Spannungen im PV-Modul 1 a führen.

Bei entsprechender Dimensionierung des jeweiligen Lagerspiels an den Befestigungsmitteln 20 bzw. des Sicherungsspiels an den Sicherungsmitteln 30a können Kräfte auch sofort aufgenommen werden. Dabei ist es von Vorteil, wenn das jeweilige Lagerspiel mittels eines weichen, komprimierbaren, ggf. federelastischen Zwischenelements ausgefüllt ist, um über die Elastizität immer noch genügend Bewegungsfreiheit zum Ausgleich von Toleranzen und besonders im Betrieb auftretender Lastschwankungen durch beispielsweise wechselnden Lasten durch Wind, Schnee und dergleichen und/oder Materialausdehnung bzw. Materialverkürzung durch schwankende thermische Belastungen zu erhalten. Damit kann Schwingen bzw. Flattern des PV-Moduls 1a auf den Querschienen bei ungünstigen Windverhältnissen durch Windauftrieb unterdrückt werden.

Hierfür geeignete Zwischenelemente könnten beispielsweise aus einem elastischen Material wie einem auf Silikon basierenden Elastomer (z. B. Silikongummi) oder auch weichem Kunststoff beispielsweise durch direktes Anspritzten an die entsprechenden Stellen der Befestigungselemente 20 bzw. Sicherungselemente 30a, 30b erzeugt werden.

Die im normalen Belastungsfall, d.h. in Einbaulage beim auf die Querschienen 60 aufgelegten PV-Modul 1a auftretenden, Lagerkräfte sind direkt am jeweiligen Projektionspunkt P1, P2 bzw. P3 als jeweilige Krafteinleitpunkte im Modul 1 a angetragen.

Der Projektionspunkt P1 veranschaulicht die Kräfte im Zusammenhang mit dem Befestigungsmittel 20, dass an den Befestigungsflächen 13a mit der Rückseite 11 des PV-Moduls 1a verbunden ist. In Einbaulage, werden vom Befestigungsmittel die Kräfte LK1 und LK2 in eine obere Querschiene der Unterkonstruktion abgetragen. Der Projektionspunkt P2 veranschaulicht die am unteren Auflagerpunkt 8b in Einbaulage des PV-Moduls 1 a in die untere Querschiene der Unterkonstruktion abgetragene Kraft LK3. Der Projektionspunkt P3 veranschaulicht die mit Verzögerung von einem an der Befestigungsfläche 13b mit der Rückseite 11 des PV-Moduls 1a verbundenen Sicherungselements 30a. D.h., wenn das PV-Modul 1a beispielsweise durch Windauftrieb angehoben wird, dann fängt das Sicherungselement das PV-Modul 1a erst nach einer gewissen Strecke und trägt dann die anliegenden Kräfte in die unter Querschiene ab. Wie bereits diskutiert, kann durch entsprechende Dimensionierung des Sicherungsspiels, beispielsweise durch Zwischenschaltung eines elastischen Elements, eine Beschädigung des PV-Moduls 1a durch Flattern aufgrund von Windauftrieb ganz vermieden werden.

Fig. 4a und 4b zeigen ein erstes und ein zweites Ausführungsbeispiel einer erfindungsgemäßen Befestigung für ein PV-Modul 1a bzw. 1d.

Der Fuß 21 der Befestigungselemente 20 bzw. der Fuß 31 der Sicherungselemente 30a und 30b weist jeweils einen trapezähnlichen Querschnitt auf. Die Materialstärke der Füße 21 bzw. 31 nimmt zu den Rändern hin durch die Trapezform kontinuierlich ab, wobei die längere Trapezseite die jeweilige Befestigungsfläche 13a bzw. 13b bildet. Durch die Verjüngung nimmt die Steifigkeit des Fußes 21 bzw. 31 zum Rand der jeweiligen Befestigungsfläche 13a bzw. 13b hin ab, wodurch eine sprunghafte Änderung der Steifigkeit des Fußes zwischen belastetem und nicht belastetem Bereich der Rückseite 14 des PV-Moduls 1 vermieden werden. Dadurch werden lokale Spannungskonzentrationen im Belastungsfall reduziert. Hier sei angemerkt, dass die Ränder der Füße 21 bzw. 31 auch rund oder eckig ausgeführt sein können.

Die Darstellung in Fig. 4a ist eine Seitenansicht des PV-Moduls 1a der Fig. 1, 2 und 3. Zu erkennen ist, dass am plattenförmigen Grundkörper des PV-Moduls 1a auf dessen Rückseite 11 an der Befestigungsstelle 13a ein Befestigungselement 20 mittels der Klebeschicht 12 angebracht ist.

Am Fuß 21 des Befestigungselements 20 befindet sich an einer der Befestigungsfläche 13a gegenüber liegende Auflagerfläche 22 ein Verankerungsmittel mit einem Ankerkörper 23. Der Ankerkörper 23 ist so ausgestaltet, dass er mit einer Nut 61 in einer oberen Querschiene 60a der Querschienen 60 einer Unterkonstruktion in Eingriff gebracht werden kann.

Wie bereits erläutert weist die obere Querschiene 60a hierzu ein C-Profil auf mit einer Nut 61 auf. Die Nut 61 besitzt im Wesentlichen eine U-förmige Grundform mit nach innen gerichteten Hinterschneidungen 62a und 62b an den beiden Schenkelenden der U-Form, d.h. an der Öffnung der Nut 61. Wesentlich für die Funktion des Befestigungsmittels 20 ist das Vorhandensein wenigstens einer der Hinterschneidungen 62a und 62b an den U-Schenkeln. Der Boden 63 der Nut 61 könnte grundsätzlich in der Querschiene 60 nach unten auch abschnittsweise offen also durchbrochen beispielsweise als Ablauf für Kondenswasser ausgeführt sein.

Am Ankerkörper 23 ist am der Auflagefläche 22 gegenüberliegenden Ende wenigstens ein Verankerungsmittel in Form eines Spreizelements vorgesehen, dass hier Schnapphaken 24 ausgeführt ist. Im Ausführungsbeispiel der Fig. 4a besitzt das Verankerungsmittel zwei Schnapphaken 24, die beim Einsetzten des Ankerkörpers 23 in die Nut 61 den Hinterschneidungen 62a, 62b ausweichen bzw. an der durch die Hinterschneidungen 62a, 62b gebildeten Engstelle ausgelenkt bzw. zusammengedrückt werden und im Inneren der Nut 61 sich nach Passage der Engstelle wieder auseinanderspreizen bzw. abspreizen und so die Hinterschneidungen 62a, 62b hintergreifen. In der Fig. 4b ist an der Nut in der Querschiene 60a nur eine Hinterschneidung 62b vorgesehen und daher auch am Ankerkörper 23 nur ein Schnapphaken 24 zum Hintergreifen der Hinterschneidung 62b ausgebildet.

Das Verankerungsmittel kann grundsätzlich als Rastverbindung oder Anker oder dergleichen ausgeführt werden. Beispielsweise könnte das Verankerungsmittel auch aus einem pilzförmigen elastischen und damit komprimierbaren Material bestehen, welches beim Einsetzten in die Nut 61 zusammengedrückt wird und sich im Inneren der Nut 61 dann wieder ausdehnt, um auf diese Weise die Hinterschneidungen 62a, 62b zu hintergreifen.

Im Ergebnis bildet das Befestigungselement 20 bei der Montage des PV-Moduls 1a mit der oberen Querschiene 60a eine formschlüssige Verbindung nach Art einer Schnapp-Rast-Verbindung, die somit einfach hergestellt werden kann und je nach Dimensionierung nur zerstörend oder lediglich mit hohem Krafteinsatz ggf. mit einem Spezialwerkzeug wieder gelöst werden kann. Die formschlüssige Verbindung kann als effektiver Schutz gegen Diebstahl ausgelegt werden, indem ein Versuch das PV-Modul 1 a von den Querschienen abzunehmen zur Zerstörung des PV-Moduls führt.

Es ist auch möglich, das Verankerungsmittel in die als Nut ausgeführter Aufnahme dauerhaft mittels eines elastischen Klebemittels wie einem auf Silikon basierenden Klebers fest eingeklebt werden. Wenn das Klebemittel im verfestigten Zustand noch genügend Elastizität besitzt um ein ausreichendes Lagerspiel zuzulassen, was Spannungen im Modul in Richtung der Verbindungslinie benachbarter Befestigungselemente vermeidet.

In den Fig. 4a und 4b sind noch die möglichen im Zusammenhang mit den Kräften SK1 und SK2 in der Fig. 3 erläuterten Lagerspiele S1 und S2 gekennzeichnet, mittels deren Dimensionierung dem Modul in Einbaulage noch eine gewisse Beweglichkeit zur Vermeidung von Spannungen gelassen werden kann. Es sei angemerkt, dass das in den Figuren gezeigte Lagerspiel zur bessern Erkennbarkeit größer als notwendig gezeichnet ist.

Weiter ist noch zu erkennen, dass das Befestigungsmittel 20 eine Auflagefläche 22 besitzt, die sich um den Ankerkörper 23 herum erstreckt und mit der Stützfläche 65 an der Querschiene 60a im Einbaulage in Kontakt steht. Diese Kontaktfläche entspricht den oberen Auflagerpunkten 8a. Selbstverständlich kann an der Auflagerfläche 22 und/oder der Stützfläche 65 ebenfalls eine elastische Schicht oder Element vorgesehen werden, um die oberen Auflagepunkte 8a zu bedämpfen.

Die Ausführungsbeispiele der Fig. 4a und 4b unterscheiden sich weiter hinsichtlich des Sicherungselements 30a bzw. 30b sowie im Profil der Querschiene 70.

Die Sicherungselemente 30a und 30b sind ausgelegt, mit einer unteren Querschiene 60b so zusammenzuwirken, dass das Sicherungselement 30a bzw. 30b ein Abheben des PV-Moduls von der unteren Querschiene 60b beispielsweise durch Windauftrieb verhindern kann.

Dazu ist das Sicherungselement 30a bzw. 30b so geformt, dass es entweder die gesamte Querschiene 60 (Fig. 4a) oder eine an der Querschiene 70 (Fig. 4b) vorgesehene Kante beispielsweise in Form einer Kragplatte 75 hintergreifen kann. Die Querschiene 70 unterscheidet sich von der Querschiene 60 lediglich durch die seitlich angeformte Kante 75, die im dargestellten Beispiel symmetrisch an den Außenseiten der U-Schenkel der Nut 71 flügelartig abstehen.

Durch die symmetrische Gestalt besitzt die Querschiene 60b keine bevorzugte Einbaurichtung, was einen Falscheinbau ausschließt. Es versteht sich, dass es grundsätzlich ausreicht, an der Querschiene 60b nur an der zur oberen Querschiene 60a weisenden Seite die angeformte Kante 75 vorzusehen.

Generell sei in diesem Zusammenhang angemerkt, dass - wie in Fig. 4a gezeigt - als obere Querschiene 60a und unter Querschiene 60b Profilschienen mit identischem Profil verwendet werden können. Dann kann am Installationsort keine Verwechslung zwischen den beiden Querschienen auftreten. Auch muss nur ein Schienentyp vorgehalten werden. D.h., auch im Ausführungsbeispiele der Fig. 4b könnte an Stelle der Querschiene 60a auch eine Querschiene 70 eingesetzt werden.

Weiter versteht es sich von selbst, dass das Spreizelement des Befestigungselements grundsätzlich an die Formgebung der Nut in der Querschiene angepasst sein muss. Für den Fachmann ist es klar, dass er zahlreiche Modifikationen hinsichtlich der konkreten Gestaltung der Nut als auch des Verankerungsmittels vornehmen kann, ohne dabei vom Prinzip der Erfindung abzuweichen.

Hinsichtlich der Sicherungselemente 30a (Fig. 4a) und 30b (Fig. 4b) sei angemerkt, dass diese grundsätzlich als ein an der Rückseite 11 des PV-Moduls 1 befestigter abgewinkelter Arm A ausgeführt sind, wobei der Arm A mit der Rückseite des Moduls 11 eine maulartige Öffnung bildet, die in Richtung der Falllinie 10 des Moduls gerichtet ist. Im ersten Ausführungsbeispiel der Fig. 4a ist die Maulweite der Öffnung so dimensioniert, dass der Arm A die ganze Querschiene 60 hintergreifen kann, und im zweiten Ausführungsbeispiel der Fig. 4b ist die Maulweite der Öffnung so dimensioniert, dass der Arm A die an der Querschiene 70 vorgesehene Kragplatte 75 hintergreifen kann.

Der abgewinkelte Arm A des Sicherungselements 30a bzw. 30b besitzt im Wesentlichen einen zur Rückseite 11 des PV-Moduls 1 a bzw. 1 d senkrechten Abschnitt 32a bzw. 32b und parallelen Abschnitt 33a bzw. 33b. Der senkrechte Abschnitt 32a bzw. 32b besitzt eine senkrechte in Einbaulage einer Außenfläche 67 der Querschiene zugewandte Armfläche 34a bzw. 34b, die aufgrund des Lagerspiels S4a bzw. S4b nur beim Einbau mit der Außenfläche 67 in Kontakt geraten kann. Für die Dimensionierung des Lagerspiels S4a bzw. S4b ist der Abstand zwischen der oberen Querschiene 60a und der unteren Querschiene 60b sowie der Abstand zwischen den Befestigungselementen 20 und den Sicherungselementen 30a bzw. 30b am PV-Modul 1 entscheidend.

Der zur Rückseite 11 parallele Abschnitt 33a bzw. 33b besitzt eine Kontaktarmfläche 35a bzw. 35b, die, wenn kein Lagerspiel S3a bzw. S3b vorhanden ist, in Einbaulage des PV-Moduls an der Querschienenrückseite 66 anliegt.

Der Arm A besitzt zwar augenscheinlich im ersten und zweiten Ausführungsbeispiel eine Form, die mit einem Haken vergleichbar ist. Der Unterschied zu einem Haken beim erfindungsgemäßen Sicherungselement 30a bzw. 30b besteht jedoch darin, dass dieser Haken bei bestimmungsgemäßer Verwendung unbelastet ist. Mit anderen Worten ist das PV-Modul 1a bzw. 1d gerade nicht mittels dieses Hakens an der Querstrebe 60 bzw. 70 eingehängt, weil der vermeintliche Haken keine Komponente der vom Modul ausgeübten Gewichtskraft abträgt.

Das Sicherungselement 30a bzw. 30b nimmt lediglich je nach Dimensionierung des Lagerspiels S3a bzw. S3b und S4a bzw. S4b über die Maulweite im Sicherungsfall sofort oder verzögert die Kräfte SK3 bzw. SK4 (vgl. Fig. 3) auf, wenn das PV-Modul 1 a bzw. 1d angehoben wird bzw. falls es beim Einbau zu weit in Richtung der Falllinie 10 abrutschen sollte. D.h. die Hakenfunktion wäre hier eine vorteilhafte Zweitfunktion beim Einbau.

Um beispielsweise bei ungünstigen Windverhältnissen Klappern der PV-Module durch Windauftrieb zu vermeiden, kann neben der Dimensionierung der Maulweite auch wie bereits erwähnt im Bereich der Toleranzen S3a und S3b ein elastisches Material vorgesehen werden, dass das PV-Modul im Normalzustand, in dem die Rückseite 11 des Moduls an allen Auflagerstellen aufliegt, gehalten wird, aber dennoch bei Belastung in Richtung des elastischen Materials und besonders in Richtung des Pfeils F2 (vgl. Fig. 4a bzw. 4b) ausweichen kann. D.h., auftretende Kräfte bis zu einer bestimmten Größe werden dann über die Kompression des elastischen Materials abgefangen und gedämpft, wodurch ein Aufschwingen des Systems vermieden wird.

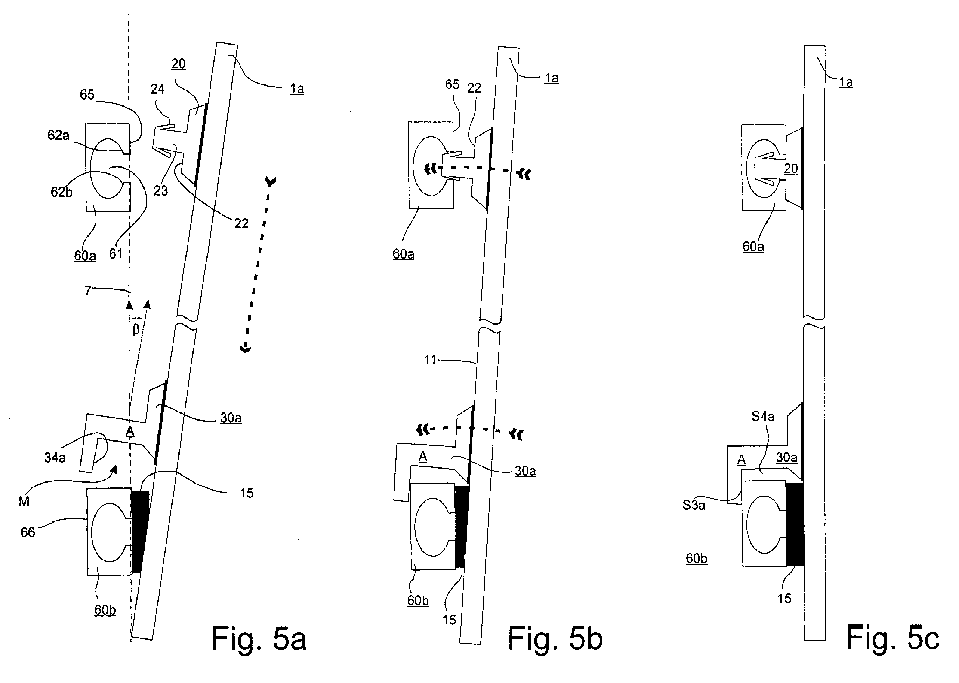

Fig. 5a bis 5c veranschaulichen die Montage eines PV-Moduls 1a der Fig. 1 bis 4a an zwei Querschienen 60 mit dem erfindungsgemäßen Befestigungs- und Sicherungssystem gemäß dem Ausführungsbeispiel der Fig. 4a. Dabei ist das Lagerspiel S2a durch eine entsprechende Dimensionierung der Maulweit der durch den abgewinkelten Arm A gebildeten maulartigen Öffnung gleich Null. Die Beweglichkeit des PV-Moduls 1a in Richtung des Pfeils F2 wird im Wesentlichen durch ein elastisches Element 15, welches zwischen der untern Querschiene 60a und der Rückseite 11 des PV-Moduls 1a angeordnet ist, sichergestellt.

Das elastische Element 15 kann wie in den Fig. 5a bis 5c im Querschnitt insbesondere dreieckig, oval, kreisförmig oder viereckig ausgebildet sein. Im vorliegenden Ausführungsbeispiel ist das elastische Element 15 rechteckförmig ausgebildet. Dabei verläuft die Ebene des Querschnitts rechtwinklig zu der Oberflächenebene der plattenförmigen Elemente 1 a und derart, dass die Falllinie 10 (siehe Fig. 1) in diese Querschnittsebene liegt. Das elastische Element 15 kann durch Ablängen von als Endlosware vorliegenden Materialsträngen mit rechteckigen Querschnitt hergestellt werden.

Das elastische Element 15 kann aus einem weichem Kautschuk, Silikon oder Ethylen-Propylen-Dien-Kautschuk (EPDM) gefertigt sein. Weicher Kautschuk ist ein besonders preiswertes und leicht zu verarbeitendes Material. Silikon oder Ethylen-Propylen-Dien-Kautschuk (EPDM) eignen sich besonders, da beide Materialien besonders UVbeständig sind. Ferner sind Silikon oder Ethylen-Propylen-Dien-Kautschuk (EPDM) besonders chemikalienresistent, insbesondere gegenüber ammoniakhaltigen Gasen, wie sie in der Umgebung von Nutzgebäuden zur Nutztierhaltung in erhöhten Konzentrationen auftreten können.

Das elastische Element 15 ist nach einer erfindungsgemäßen Ausführungsform an dem PV-Modul 1a und insbesondere auf der Oberfläche der Rückseite des PV-Moduls 1a stoffschlüssig an diesem befestigt. Wenn das elastische Element 15 aus Silikon besteht, kann das Silikon auf das PV-Modul aufgespritzt und so in seine gewünschte Form als Auflager gebracht werden. Es kann aber auch ein vorgefertigtes elastisches Element 15, z.B. aus Ethylen-Propylen-Dien-Kautschuk (EPDM), zur Herstellung dieser stoffschlüssigen Verbindung verwendet werden, das auf ein PV-Modul aufgeklebt wird. In diesem Fall ist das elastische Element 15 auf dem PV-Modul mittels einer Klebschicht befestigt.

Das elastische Element 15 kann grundsätzlich bereits zusammen mit den Befestigungselementen 20 sowie den Sicherungselementen 30a werkseitig auf der Rückseite 11 des PV-Moduls 1 a bzw. alternativ auf der Stützfläche der Querschiene 60b stoffschlüssig, insbesondere durch Kleben, befestigt werden, also vor der eigentlichen Montage an der unteren und oberen Querschiene 60a, 60b.

In Fig. 5a veranschaulicht einen ersten Schritt der Montage des PV-Moduls 1 a an der oberen Querschiene 60a und der unteren Querschiene 60b. Hierzu wird das PV-Modul 1a mit der durch den Arm A des Sicherungselements 30a gebildeten Öffnung M an derunteren Querschiene 60b aufgesteckt. Dazu muss das PV-Modul 1 a in einem spitzen Winkel β zur Montageebene 7 aus Richtung der oberen Querschiene 60a, d.h. in Richtung des gestrichelten Pfeils mit einer einfachen Spitze, mit der Öffnung M auf die Querschiene 60b zu bewegt werden. Durch den spitzen Winkel β wird das elastische Element 15 zwischen der Querschiene 60b und der Rückseite 11 komprimiert und dämpft dabei vorteilhaft auftretende Kräfte beim Einsetzen des PV-Moduls 1a.

Fig. 5b veranschaulicht den nächsten Schritt der Montage, bei dem sobald die Öffnung M die untere Querschiene 60b hintergreift, das PV-Modul 1a in Richtung des gestrichelten Pfeils mit Doppelspitze, d.h. in Richtung der Montageebene 7, gekippt wird. Das Kippen erfolgt dabei so, dass der Ankerkörper 23 des Befestigungselements 20 mit den Schnapphaken voraus in die Nut 61 der oberen Querschiene 60a eingefügt wird.

Wie in Fig. 5b angedeutet, werden die Schnapphaken 24 von den Hinterschneidungen 62a und 62b an der Öffnung der Nut 61 der oberen Querschiene 60a eingelenkt bzw. zusammengedrückt. Sobald das vom Ankerkörper 23 und den Schnapphaken 24 gebildete Verankerungsmittel in die Nut 61 eingefügt ist, schnappen die Schnapphaken wieder in ihre ursprünglich abgespreizte Lage zurück und hintergreifen so die Hinterschneidungen 62a und 62b an der Öffnung der Nut 61.

Dann ist der in Fig. 5c gezeigte Einbauzustand hergestellt, bei dem die Auflagefläche 22 des Befestigungselements 20 an der Stützfläche 65 der oberen Querschiene 60a anliegt. Weiters liegt die Kontaktarmfläche 34a des Sicherungselements 30a an der Rückseite der unteren Querschiene 60b an, sodass kein Lagerspiel S3a besteht. Jedoch ist das Lagerspiel S4a in Richtung der Falllinie 10 ausreichend groß ausgelegt, um zum Einen Toleranzen hinsichtlich der Abstände der montierten Querschienen 60 sowie zum Anderen Längenänderungen des PV-Moduls 1 a aufgrund von Temperaturschwankungen auszugleichen.

## Patentansprüche

1. Montagesystem für plattenförmige Elemente (1), insbesondere Fassadenelemente, Thermogeneratorelemente, thermische Sonnenkollektoren, Photovoltaik-Module oder Solar-Module, zum Befestigen des Elements (1) an wenigstens einer oberen und einer unteren Querschiene (60, 60a, 60b), die entlang verlaufend und beabstandet zu einander zum Halten eines Elements (1) angeordnet sind,
wobei das Montagesystem aufweist:
wenigsten ein mit der Rückseite (11) des Elements (1) fest verbundenes Befestigungselement (20) mit wenigstens einem im Wesentlichen senkrecht zur Ebene der Rückseite (11) angeordneten Verankerungsmittel zur Befestigung an der oberen Querschiene (60a),
wobei das Befestigungselement (20) im Bezug auf eine Falllinie (10) in Einbaulage des Elements (1) zu einer oberen Kante (OK) einer Außenkontur des Elements (1) einen geringeren Abstand als zu einer unteren Kante (UK) der Außenkontur aufweist,
wobei in Bezug auf die Falllinie (10) unterhalb des wenigstens einen Befestigungsmittels (20) an der Rückseite (11) des Elements (1) wenigstens ein elastisches Element (15) derart angeordnet ist, dass es bei einem auf den Querschienen (60; 60a, 60b) montierten Element (1) auf der unteren Querschiene (60; 60b) aufliegt.

2. Montagesystem nach Anspruch 1,
wobei das Montagesystem weiter wenigstens ein Sicherungselement (30a; 30b) aufweist, das in Bezug auf die Falllinie (10) in Einbaulage des Elements (1) unterhalb des Befestigungselements (20) angeordnet ist, und
wobei das Sicherungselement (30a; 30b) einen beabstandet und parallel zur Rückseite (11) sowie im Wesentlichen senkrecht zur Falllinie (10) verlaufenden abgewinkelten Arm (A) aufweist, der mit der Rückseite (11) eine im Wesentlichen in Richtung der Falllinie (11) geöffnete maulförmige Öffnung (M) zum Hintergreifen einer aus Sicht der Montageebene an der oder von der unteren Querschiene (60; 60b) gebildeten Hinterschneidung (66; 76) aufweist.

3. Montagesystem nach einem der Ansprüche 1 oder 2,
wobei das wenigstens eine Befestigungselement (20) und bei Rückbezug auf Anspruch 2 das wenigstens eine Sicherungselement (30a; 30b) an der Rückseite (11) des Elements (1) stoffschlüssig, insbesondere mittels einer Klebeverbindung (12) befestigt ist.

4. Montagesystem nach einem der Ansprüche 1 bis 3,
wobei mehrere Befestigungselemente (20) und bei Rückbezug auf Anspruch 2 mehrere Sicherungselemente (30a; 30b) an der Rückseite (11) des Elements (1) auf einer im Wesentlichen senkrecht zur Falllinie (10) verlaufenden Linie angeordnet sind, und
wobei bevorzugt jeweils ein Befestigungselement (20) und ggf. ein Sicherungselemente (30a; 30b) an der Rückseite (11) des Elements (1) auf einer im Wesentlichen zur Falllinie (10) parallel verlaufenden Linie angeordnet sind.

5. Montagesystem nach Anspruch 4,
wobei das Befestigungselement (20) und/oder das Sicherungselement (30a; 30b) als Profilschiene ausgeführt sind, die jeweils im Wesentlichen senkrecht zur Falllinie (10) an der Rückseite (11) des Elements (1) befestigt ist bzw. sind.

6. Montagesystem nach einem der Ansprüche 1 bis 5,
wobei das wenigstens eine Befestigungselement (20) bzw. das wenigstens eine elastische Element (15) jeweils von der Außenkontur des PV-Elements (1) beabstandet im Flächeninneren der Rückseite (11) und bevorzugt an solchen Stellen angeordnet sind, dass das Element (1) in Montagelage eine minimale Biegebelastung erfährt.

7. Montagesystem nach einem der Ansprüche 1 bis 6,
wobei das Verankerungsmittel des Befestigungselements (20) einen Ankerkörper (23) mit einem an einem der Rückseite (11) des Elements (1) gegenüberliegenden Ende des Ankerkörpers (23) angeordneten, verdrängbaren und sich selbsttätig rückstellenden Hinterschneidungselement, insbesondere in Form wenigstens eines Schnapphakens (24), aufweist.

8. Plattenförmiges Element, insbesondere Fassadenelemente, Thermogeneratorelemente, thermische Sonnenkollektoren, Photovoltaik-Modul oder Solar-Modul, mit einer Rückseite (11) an ein Montagesystem gemäß einem der Ansprüche 1 bis 7 befestigt ist.

9. Element nach Anspruch 8,
wobei die Elemente (1) Photovoltaik-Module, insbesondere rahmenlose Dünnschichtmodule, sind.

10. Unterkonstruktion zur Bildung einer Montageebene und zum Halten wenigstens eines plattenförmigen Elements (1) in der Montageebene gemäß einem der Ansprüche 8 bis 9, wobei die Unterkonstruktion aufweist:
wenigstens eine erste und eine zweite Querschiene, die parallel und beabstandet zu einander zum Halten wenigstens eines Elements angeordnet sind,
wobei jede der Querschienen wenigstens an oberen und unteren Auflagestellen des wenigstens eine Elements (1) plane Stützflächen aufweist,
wobei wenigstens die erste Querschiene, die in Bezug auf eine Falllinie (10) der Montageebene oberhalb der zweiten Querschiene angeordnet ist, wenigstens an den oberen Auflagestellen Ausnehmungen mit Hinterscheidungen zur Aufnahme des Verankerungsmittels und zum Zusammenwirken mit dem verdrängbaren Hinterschneidungselement, insbesondere in Form wenigstens eines Schnapphakens (24), aufweist,
wobei wenigstens die zweite Querschiene (60b) wenigstens im Bereich unterer Auflagestellen aus Sicht der Montageebene eine Hinterschneidung für ein am Element befestigtes Sicherungselement (30a; 30b) aufweist, und bevorzugt auf der Stützfläche der zweiten Querschiene (60b) als Auflagerfläche für die Rückseite (11) eines ein Elements (1) ein elastisches Element (15), bevorzugt aus einem Silikongummi, angeordnet ist.

11. Unterkonstruktion nach Anspruch 9 oder 10,
wobei wenigstens die erste Querschiene eine Profilschiene mit einer Nut in der Stützebene ist, wobei die Nut die Ausnehmung für das Befestigungselement bildet und wenigstens die Hinterschneidung für das verdrängbare Hinterschneidungselement aufweist.

12. Unterkonstruktion gemäß Anspruch 10 bis 11,
wobei wenigstens die zweite Querschiene zur Ausbildung der Hinterschneidung eine parallel zur Querschiene verlaufende Kragplatte aufweist.

13. Unterkonstruktion gemäß einem der Ansprüche 10 bis 12,
wobei die erste und zweite Querschiene Profilschienen, insbesondere Strangpressprofilschienen sind, die bevorzugt aus einem Metall oder einer Metalllegierung, insbesondere Aluminium oder einer Aluminiumlegierung, bestehen.
